# EUROPEAN PATENT SPECIFICATION

(11) **EP 3 984 359 B1**
(45) Date of publication and mention of the grant of the patent: **17.07.2024**
(21) Application number: 20202186.1
(22) Date of filing: 16.10.2020
(51) Int. Cl.: A01M 7/00

(54) **AGRICULTURAL SPRAYER AND METHOD FOR OPERATING AN AGRICULTURAL SPRAYER**
LANDWIRTSCHAFTLICHE SPRÜHVORRICHTUNG UND VERFAHREN ZUM BETREIBEN EINER LANDWIRTSCHAFTLICHEN SPRÜHVORRICHTUNG
PULVÉRISATEUR AGRICOLE ET PROCÉDÉ DE FONCTIONNEMENT D'UN PULVÉRISATEUR AGRICOLE

(43) Date of publication of application: 20.04.2022
(73) Proprietor: Kverneland Group Nieuw-Vennep B.V., 2153 LR Nieuw-Vennep (NL)
(72) Inventor: VAN DER KROGT, René, 2153 LR Nieuw-Vennep (NL)
(74) Representative: Bittner, Thomas L.

(56) References cited:
- US-A1- 2004 158 381
- US-A1- 2016 286 780

## Description

The present disclosure refers to an agricultural sprayer and a method for operating an agricultural sprayer.

### Background

Agricultural sprayers are used for dispensing spraying material in the field. The agricultural sprayer can be provided with a sprayer boom comprising a plurality boom sections. Dispensing elements such as nozzles are located on the boom sections for dispensing the spraying material in operation. The sprayer boom may be provided with two wings on opposite sides of a central boom section. The wings and / or single boom sections may be relocatable or moveable between different locations or positions, for example, by pivoting boom sections. For applying such relocation or movement one or more actuators are provided. The actuators are controlled by an operation controller of the agricultural sprayer for controlled movement of the boom section(s) between the different locations or positions. For example, the boom sections may be pivotable between different locations or positions. Among the different positions there may be a transport position and a working position for the boom section. In the transport position the boom section is in a location applied, for example, for transportation of the agricultural sprayer outside the field on a street. The working position applies to operation of the agricultural sprayer on the field for dispensing the spraying material. Movement of the boom sections between the different positions or locations needs to be controlled for safe operation of the agricultural sprayer.

Document US 2004 / 158 381 A1 discloses a roll control system for controlling a roll position of a boom rotatably coupled to a support frame, the boom comprising left and right wing sections (where the roll of the boom refers to a clockwise or counterclockwise rotation of said boom relative to the support frame).

In document US 2016 / 286 780 A1, an apparatus for spreading solid active agents and a method for controlling the apparatus is disclosed. A boom is pivotably mounted on a vehicle. A sensor arrangement detects an angular velocity and / or an angular position of the boom about a pivot axis. A control unit processes output signals of the sensor arrangement to control signals for an actuator to adjust the boom. The actuator has an active pressure side for each of the two adjustment directions of the boom. Approximately equal pressure levels prevail in the active pressure sides of two actuators operating in opposition or of a double-acting actuator, when the boom is stationary or moves only slightly in relation to the carrier vehicle. A defined differential pressure is adjustable between the active pressure sides of the actuators when the boom is shifted in relation to the carrier vehicle.

### Summary

It is an object to provide an agricultural sprayer and a method for operating an agricultural sprayer which allow for precise and accurate slope correction control for a sprayer boom.

For solving the problem, an agricultural sprayer and a method for operating an agricultural sprayer according to the independent claims 1 and 10, respectively, are provided. Further developments are the subject of dependent claims.

According to an aspect, an agricultural sprayer is provided, comprising a sprayer boom having a central boom section, a plurality of boom sections provided in boom wings pivotably connected to the central boom section on opposite sides of the central boom section, and a plurality of dispensing elements provided on the boom wings for dispensing a spraying material in operation. The agricultural sprayer is further having an actuator comprising an actuator element which can be moved between at least a retracted and an extended position, wherein an element length of the actuator element is changed when the actuator element is moved between the retracted and the extended position and wherein the actuator is configured, by adjusting the element length of the actuator element, to provide slope correction for the sprayer boom; and an operation controller. The operation controller is configured to: receive a first request for slope correction for the sprayer boom, comprising moving the sprayer boom to a first slope correction position; assign the first slope correction position of the sprayer boom to a first element length of the actuator element; provide first slope correction control signals assigned to the first element length of the actuator element; and apply the first slope correction control signals to the actuator element, thereby, adjusting the element length of the actuator element to the first element length for moving the sprayer boom to the first slope correction position.

According to another aspect, a method for operating an agricultural sprayer is provided. The agricultural sprayer is provided with a sprayer boom having a central boom section, a plurality of boom sections provided in boom wings pivotably connected to the central boom section on opposite sides of the central boom section, and a plurality of dispensing elements provided on the boom wings for dispensing a spraying material in operation. The agricultural sprayer is further having an actuator comprising an actuator element which can be moved between at least a retracted and an extended position, wherein an element length of the actuator element is changed when the actuator element is moved between the retracted and the extended position and wherein the actuator is configured, by adjusting the element length of the actuator element, to provide slope correction for the sprayer boom; and an operation controller. The method is comprising: receiving a first request for slope correction for the sprayer boom, comprising moving the sprayer boom to a first slope correction position; assigning the first slope correction position of the sprayer boom to a first element length of the actuator element; providing first slope correction control signals assigned to the first element length of the actuator element; and applying the first slope correction control signals to the actuator element, thereby, adjusting the element length of the actuator element to the first element length for moving the sprayer boom to the first slope correction position.

By the technology proposed correction for the sprayer boom of an agricultural sprayer can be conducted and controlled more precisely. Slope correction, within the meaning of the present disclosure, refers to adjusting the horizontal position or orientation of the sprayer boom, one or both boom wings being in a partially or a fully unfolded position.

By means of the slope correction the relative position of the sprayer boom or a boom wing relative to the soil or ground on which the agricultural sprayer is travelling can be adjusted. For example, the sprayer boom may be kept in a position essentially parallel to the surface of the ground. In such embodiment slope correction may be applied in response to the slope of the ground changing. Changing slope of the ground may be detected by a sensor device, for example, a distance sensor provided on the boom wings may be applied. Alternatively or in addition, some inclination sensor may be provided for detecting slope information for the travelling ground.

The operation controller may be further configured to: receive a second request for slope correction for the sprayer boom, comprising moving the sprayer boom to a second slope correction position different from the first slope correction position; assign the second slope correction position of the sprayer boom to a second element length of the actuator element different from the first element length; provide second slope correction control signals assigned to the second element length of the actuator element; and apply the second slope correction control signals to the actuator element, thereby, adjusting the element length of the actuator element from the first element length to the second element length for moving the sprayer boom from the first slope correction position to the second slope correction position. Slope correction applied by adjusting the horizontal position or orientation of at least one of the sprayer boom as whole and one or two boom wings may be applied several times while the agricultural sprayer is travelling on the field for dispensing the spray material.

The actuator element may be functionally connected to the central section and configured to apply rotational movement to the central section around an axis extending transversely to a sprayer boom extension in an unfolded position of the sprayer boom for moving the sprayer boom to at least one of the first slope correction position and the second slope correction position. Controlled extension and retraction of the actuator element may cause rotational movement of a frame element of the central section of the sprayer boom. The central section, e.g. the frame element, is rotatable around an axis extending in a driving or travelling direction when the agricultural sprayer is travelling on the field. By the actuator element functionally connected to the central section an central slope correction for the sprayer boom (as whole) can be conducted or accomplished precisely by means of the length or stroke control applied for the actuator element.

The actuator element may be provided in a functional connection between the central section and one of the boom wings and configured to pivot the boom wing relative to the central section for moving the sprayer boom to at least one of the first slope correction position and the second slope correction position. There may be such actuator element on both opposite sides of the central section for controlled pivoting a boom wing on either side. By the actuator element provided in functional connection between the central section and one of the boom wings an individual slope correction for the boom wing(s) can be conducted or accomplished precisely by means of the length or stroke control applied for the actuator element. For slope correction, the boom wing being unfolded or extended fully or in part is pivoted around an axis extending in a driving or travelling direction when the agricultural sprayer is travelling on the field.

The operation controller may be further configured to apply the first slope correction control signals to a first actuator element functionally connected to the central section for moving the sprayer boom to one of the first slope correction position and the second slope correction position; and the second slope correction control signals to a second actuator element provided in functional connection between the central section and one of the boom wings for moving the sprayer boom to the other one of the first slope correction position and the second slope correction position. A single slope correction operation may comprise both applying the first slope correction control signals to a first actuator element and applying the second slope correction control signals to a second actuator element.

The operation controller is further configured to receive measurement signals from a length measurement device assigned to the actuator, the measurement signals being indicative of the element length of the actuator element. Based on such measurement signals, the operation controller checks whether the element length of the actuator has been adjusted correctly in response to the different slope correction control signals.

The operation controller may be configured to apply an element length control mode for the actuator while the boom wings are moved between an unfolded operation position and an folded transport position. For example, the operation controller may limit adjustment of the element length to a limited range. While the element length is adjusted in response to the slope correction control signals, the operation controller will check whether the adjusted length complies with the limit set.

The operation controller, for applying the element length control mode for the actuator, may be further configured to: provide a plurality of allowed element length values for the element length of the actuator element, wherein for each of the allowed element length values, while the boom wings are moved between the unfolded operation position and the folded transport position, at least one of the following is provided: the sprayer boom is kept below a clearance height, and the sprayer is kept outside a lower distance limit with respect to at least one other element of the agricultural sprayer; allow the actuator element adjusting the element length to one or more of the allowed element length values; and prevent the actuator element from adjusting the element length to a forbidden element length value different from the plurality of allowed element length values. Such controlled operation, for example, allows for keeping any section or element of the sprayer boom below a clearance height while the sprayer boom is folded or unfolded. There may be a maximum clearance height for safety reasons. In addition or alternatively, while the sprayer boom is folded or unfolded, collision between any element or any section of the sprayer boom and some other part or element of the agricultural sprayer, such as a mudguard, can be avoided. Folding and unfolding can be safely conducted. In such embodiment, the actuator provided for slope correction will be applied for one or more additional function (e.g. keeping clearance, avoiding collision).

In the embodiment, by applying the (length or stroke) controlling to the slope correction actuators, the sprayer boom is also prevented from possible collision with a mudguard or some other part of the sprayer machine, for example, in the process of folding and unfolding the sprayer boom. Sufficient clearance to the mudguard can be established also in the transport position of the sprayer boom, so that up and down movement of the parallelogram mechanism and the sprayer boom is possible during transport without collision with the mudguard (or other part) of the machine. The sprayer boom is prevented from both exceeding the clearance height and colliding with the mudguard (and / or some other element or part of the agricultural sprayer).

As an option, clearance height control and / or collision avoidance control as described above may be accomplished in combination with operation control of a lifting cylinder which may be provided in a parallelogram mechanism assigned to the sprayer boom. For the lifting cylinder stroke or length controlled operation may be applied similar to the operation control described for the slope correction actuators.

In some embodiments, stroke or length control has been described in relation to one or more actuators provided for slope correction. In an alternative embodiment, stroke or length controlled operation may be applied for (non-slope correction) actuators, thereby, (still) implementing at least one of clearance height control and collision avoidance control for the sprayer boom of the agricultural sprayer. For example, clearance height control and / or collision avoidance control, e.g. with respect to the mudguard may be accomplished by applying stroke or length control operation to the actuators assigned to at least one of the lifting cylinder and the parallelogram mechanism, but not to the actuators provided for slope correction.

In an alternative embodiment, an agricultural sprayer is provided, comprising a sprayer boom having a central boom section; a plurality of boom sections provided in boom wings pivotably connected to the central boom section on opposite sides of the central boom section, and a plurality of dispensing elements provided on the boom wings for dispensing a spraying material in operation. At least one actuator is provided, comprising an actuator element which can be moved between at least a retracted and an extended position, wherein an element length of the actuator element is changed when the actuator element is moved between the retracted and the extended position and wherein the actuator is configured, by adjusting the element length of the actuator element, to relocate at least one of the sprayer boom, the boom wing, and the boom section between different locations or positions. An operation controller is provided which is, for applying the element length control mode for the actuator, configured to: provide a plurality of allowed element length values for the element length of the actuator element, wherein for each of the allowed element length values, while the boom wings are moved between the unfolded operation position and the folded transport position, at least one of the following is provided: the sprayer boom is kept below a clearance height, and the sprayer is kept outside a lower distance limit with respect to at least one other element of the agricultural sprayer; allow the actuator element adjusting the element length to one or more of the allowed element length values; and prevent the actuator element from adjusting the element length to a forbidden element length value different from the plurality of allowed element length values.

For applying the element length control mode for the actuator, the operation controller may be configured to provide an user information signal indicative of at least one of the element length of the actuator element having one of the allowed element length values and preventing the actuator element from adjusting the element length to the forbidden element length value; and output the user information signal through an output device. The output device, for example, may be provided with a user terminal which may be located in a tractor carrying the agricultural sprayer. By means of the outputted user information signal, the operator will be informed about correct element length adjustment. Such user information signal may be outputted continuously while adjusting the element length of the actuator element. The output device may be configured to output at least one of video signals on a display and audio signals. The user information signal can be illustrated on the output device by graphical elements such numbers, colored icons and / or colored icons, e.g. when height clearance is not given or the step for folding or unfolding the sprayer boom is finished / unfinished.

The actuator element may comprise a pull-type cylinder. Alternatively, the actuator element may comprise at least one of the following: a single acting cylinder, a double acting cylinder, a synchronous cylinder, a pneumatic cylinder, an electric actuator, and a cylinder including damping means, e.g. accumulator.

Following, alternative embodiments for applying length or stroke control to an actuator provided in an agricultural sprayer for moving at least one boom section of the sprayer boom, for example for folding or unfolding the sprayer boom, are described. The following aspects may be material for the realization of various embodiments of slope correction, taken in isolation or in various combinations thereof.

According to another aspect, a method for operating an agricultural sprayer may be provided. The agricultural sprayer is provided with the following: a sprayer boom comprising a plurality of boom sections and a plurality of dispensing elements provided on the boom sections for dispensing a spraying material in operation; an actuator comprising an actuator element moveable between a retracted and an extended position, wherein an element length of the actuator element is changed when the actuator element is moved between the retracted and the extended position and wherein the actuator is configured, by adjusting the element length of the actuator element, to move at least one of the boom sections between different positions; a sensor device assigned to the actuator and configured to detect measurement signals indicative of the element length of the actuator element; and an operation controller. In the operation controller, the method is comprising: receiving measurement signals indicative of the element length of the actuator element from the sensor device; assigning a first position of the at least one boom section to first measurement signals indicative of a first element length of the actuator element; assigning a second position of the at least one boom section to second measurement signals indicative of a second element length of the actuator element different from the first element length; and applying a first control operation and a second control operation different from the first control operation in response to whether the at least one boom section is in the first position and the second position, respectively.

The at least one boom section which is part of the sprayer boom of the agricultural sprayer is assigned the actuator which is provided with the actuator element. For moving or relocating the at least one boom section, the actuator element is operated. The at least one boom section is relocatable between different positon, for example between a transport position and a working position, by operating the actuator comprising the actuator element. For such movement the element length of the actuator element is adjusted by extending or retracting the actuator element. The sensor device is provided for detecting measurement signals indicative of the different values for the element length of the actuator element while the at least one boom section is relocated or moved between different positions. The operator controller is configured to assign a first position and a second position to different measurement signals indicative of different element length for the actuator element. In response to having determined the actual position of the at least one boom section, the operation controller is to apply some control operation in the agricultural sprayer in dependence on or in response to the actual position determined. Thus, the operation controller provides assignment between the element length indicated by the measurement signals and the position of the at least one boom section indicated by the element length. In response, the agricultural sprayer can be controlled by the operation controller in response to the boom section position which was determined based on the measurement signals indicative of the element length of the actuator element. Length information can be detected very accurately and precisely by the sensor device which allows for efficient discrimination between different values for the element length reflecting different boom section positions or locations. Thus, operation of the agricultural sprayer can be controlled accurately and precisely.

The element length of the actuator element may be adjusted or changed by linear movement of at least one first component of the actual actuator element relative to a second component. Different kinds of actuator elements may be applied, such as hydraulic actuator, and electromagnetic actuator.

The control operation applied in response to determining the first or second position for the at least one boom section may refer to any control operation assigned to the operation controller which is to control operation of the agricultural sprayer. Such control operation, for, example may relate to dispensing or not dispensing the spraying material. Alternatively or in addition, such control operation be related to allowing movement of the agricultural sprayer or preventing such movement, for example, because the sprayer boom not being in the correct position such as transport position. It may also be provided that the operation controller provides control signals to be processed by a tractor to which the agricultural sprayer is hooked.

The operation controller may be further configured to assign a third position of the at least one boom section to third measurement signals indicative of a third element length of the actuator element different from the first and second element length, the third position being different from the first position, and the second position, and apply a third control operation different from the first and second control operation. The at least one boom section may be relocatable between a plurality of different positions or locations. Each of the positions may be assigned an individual element length of the actuator element.

The at least one boom section may be in a fully extended position which, for example, may be referred to as working position, if the actuator element is fully extended (maximum element length). The at least one boom section may be in a fully retracted position such as a transport position, if the actuator element is in a fully retracted position (minimum element length).

A user interface may be configured to receive user input, wherein the operation controller is configured to receive user input signals indicative of the user input, and apply at least one of the first control operation, the second control operation, and the third control operation in response to the user input. According to such embodiment, the at least one control operation is (only) applied after or in response to receiving user input. For example, user input may be indicative of the user confirming application of the at least one control operation. The user interface may additionally be configured to output user output such as at least one of video information and audio information to the user. For example, the user interface may be provided in a driver cabin of a self-propelled agricultural sprayer or a tractor to which the agricultural sprayer is hooked. The user information output by the user interface may be indicative of one or more positions of the at least one boom section assigned to the element length of the actuator element.

The operation controller may be configured to: receive position adjustment input signals indicative of an amended position of the at least one boom section, wherein the amended position is different from a present position of the at least one boom section; assign an amended element length to the position adjustment input signals in response to receiving the position adjustment input signals; generate element length control signals indicative of the amended element length; and apply the element length control signals to the actuator element, thereby, adjusting the element length of the actuator element from a present element length to the amended element length different from the present element length, thereby, moving the at least one boom section from the present position to the amended position. The operation controller receives position adjustment input signals requiring adjustment of the position of the at least one boom section. For having such position adjustment conducted, the operation controller will assign an amended element length to the position adjustment input signals. Based on such amended element length element length control signals are provided by the operation controller and applied for actually moving or relocating the at least one boom section from the present position to the amended position. The position adjustment input signals may be provided in the operation controller in response to user input indicative of the amended position. Alternatively or in addition, the position adjustment input signals may be provided or received in the operation controller without receiving user input before, for example, in response to some other control operation conducted by the agricultural sprayer. The request for moving to the amended position may be provided in the operation controller in response to some control operation applied to the agricultural sprayer before. For example, a former control operation with respect to the at least one boom section may be finished, the former control operation providing for locating the at least one boom section in a position in which the at least one boom section is ready to engage with fixing means in a transport position. In response to such control operation, the positions adjustment input signals may be provided indicative of moving the at least one boom section (finally) into the transport position, and, thereby, engaging with the catching or securing means.

The boom sections may be provided in a boom wing pivotably connected to a central boom section, and the actuator may be configured to move the boom wing between different wing positions in relation to the central boom section, for example, for slope correction. There may be a first boom wing and a second boom wing provided on opposite sides of the central boom section. Each of the boom wings may be provided with a plurality of boom sections which allow for establishing both a retracted and an extended wing position for the boom wings. The actuator assigned to the boom wing may be configured to adjust a wing position relative to the surface of the field on which the agricultural sprayer is travelling while applying the spraying material. For example, depending on the slope of the field surface the wing position may be adjusted by means of the actuator. There may be automatic control in response to slope measurement signals provided in the operation controller. Alternatively or in addition, other measurement signals may be detected which are indicative of a distance of middle section and / or spray boom sections in relation to the ground surface and / or some crops.

The actuator may be configured to move adjacent boom sections relative to each other. Adjacent boom sections may be moved relative to each other by pivoting one or both boom sections. Similarly, location of the boom wings may be adjusted by pivoting the whole boom wing.

The agricultural sprayer may further comprise an additional actuator comprising an additional actuator element which can be moved between a retracted and an extended position, wherein an element length of the additional actuator element is changed when the additional actuator element is moved between the retracted and the extended position. The actuator is configured, by adjusting the element length of the additional actuator element, to move an additional one of the boom sections between different positions which, for example, may comprise a transport position and a working position. An additional sensor device is provided, the additional sensor device being assigned to the additional actuator and configured to detect measurement signals indicative of the element length of the additional actuator element. With respect to the additional actuator, the aspects and embodiments disclosed for the actuator may apply *mutatis mutandis.*

The operation controller may be configured to apply a pre-configuration process comprising the following: receiving measurement signals information indicative of a plurality of different element lengths of the actuator element; receiving position information indicative of a plurality of different positions of the at least one boom section; assigning each element length from the plurality of different element lengths of the actuator element an individual position from the plurality of different positions of the at least one boom section; and storing assignment information indicative of the assignment between the plurality of different element lengths of the actuator element and the individual position from the plurality of different positions of the at least one boom section in a memory device accessible by the operation controller for reading the assignment information. The pre-configuration or calibration process may be applied prior to operating the agricultural sprayer on the field. The assignment information indicative of the assignment between the plurality of different values of the element length for the actuator element and the individual position from the plurality of different positions of the at least one boom section, for example, may be stored in a look-up table provided in the memory device. If the operation controller received measurement signals indicative of the element length of the actuator element it can assign the proper position to such element length information by accessing the assignment information in the memory device. Re-calibration or reconfiguration of the assignment information may be applied, for example, because of replacing the actuator element. Also, the assignment information may be updated at the later stage after the agricultural sprayer has been in use for some time.

In an embodiment, the different positions of the at least one boom section may comprise a transport position and a working position. The first position of the at least one boom section assigned to first measurement signals indicative of the first element length of the actuator element may be one of the transport position and the working position, and the second position of the at least one boom section assigned the second measurement signals indicative of the second element length of the actuator element may be a position different from both the transport position and the working position.

The embodiments disclosed for the agricultural sprayer may be applied to the method for operating the agricultural sprayer mutatis mutandis.

### Description of embodiments

Following, further embodiments are described with reference to figures. In the figures, show:
- Fig. 1: a schematic block diagram of components of an agricultural sprayer;
- Fig. 2: a schematic representation of an agricultural sprayer with a fully extended (unfolded) sprayer boom;
- Fig. 3: a schematic representation of the agricultural sprayer with the sprayer boom in a partly folded position while folding the sprayer boom;
- Fig. 4: a schematic representation of the agricultural sprayer from behind with the sprayer boom in a partially extended position;
- Fig. 5: a schematic representation of the agricultural sprayer, wherein the sprayer boom is in a folded position;
- Fig. 6: a schematic representation of the agricultural sprayer, wherein the sprayer boom is in a folded transport position;
- Fig. 7: a schematic representation of the agricultural sprayer, wherein the sprayer boom is in a folded position;
- Fig. 8: a schematic representations of a central portion of the sprayer boom provided in a first slope correction position; and
- Fig. 9: a schematic representations of a central portion of the sprayer boom provided in a second slope correction position which is different from the first slope correction position.

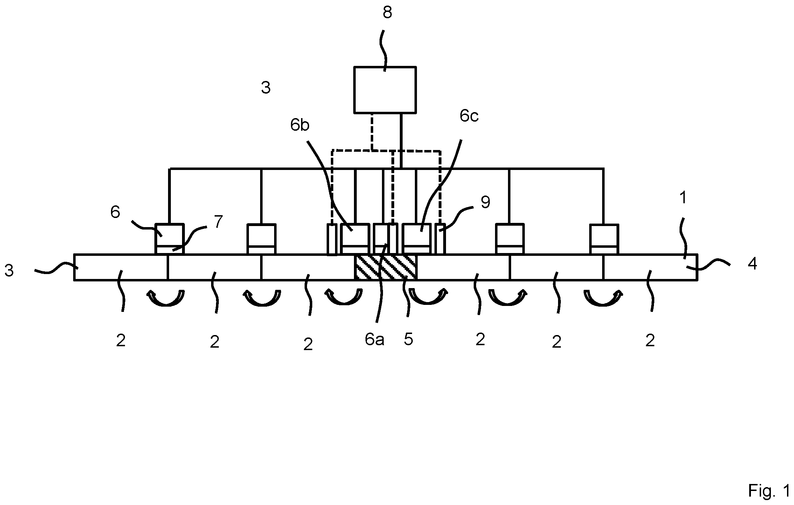

Fig. 1 shows a schematic representation of components of an agricultural sprayer provided with a sprayer boom 1 comprising a plurality of boom sections 2 providing for boom wings 3, 4 on opposite sides of a central boom section 5 of the sprayer boom 1. The plurality of boom sections 2 is assigned a plurality of actuators 6 comprising an actuator element 7. For example, each of the boom sections 2 may be assigned an actuator 6. Alternatively, only some of the plurality of boom sections 2 may be assigned an actuator 6.

The actuators 6 are connected to an operation controller 8 of the agricultural sprayer which provides control signals for operation of the actuators 6 and other control operations for the agricultural sprayer. Operation of the actuators 6 is applied for moving one or more boom sections 2 between different positions or locations. For example, the sprayer boom 1 as whole may be moved from one to another sprayer boom position, for example, by lifting or lowering the sprayer boom 1 relative the soil. In another example, one of the boom wings 3, 4 may be relocated between different positions by means of the actuator 6.

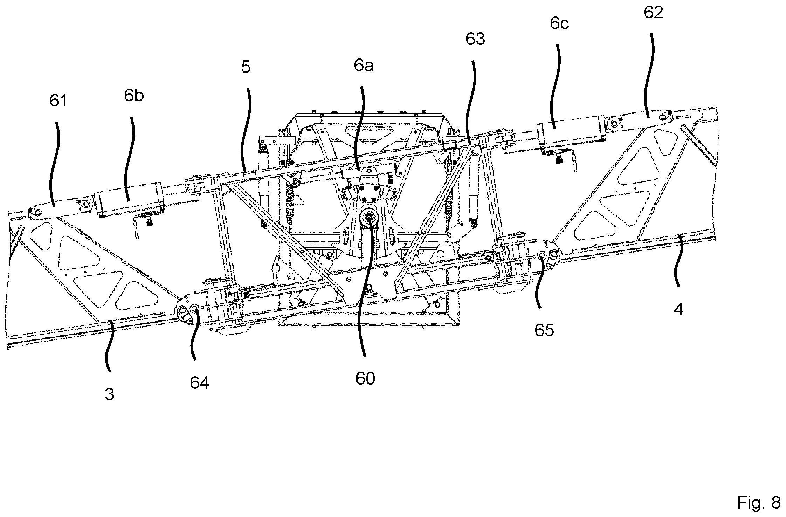

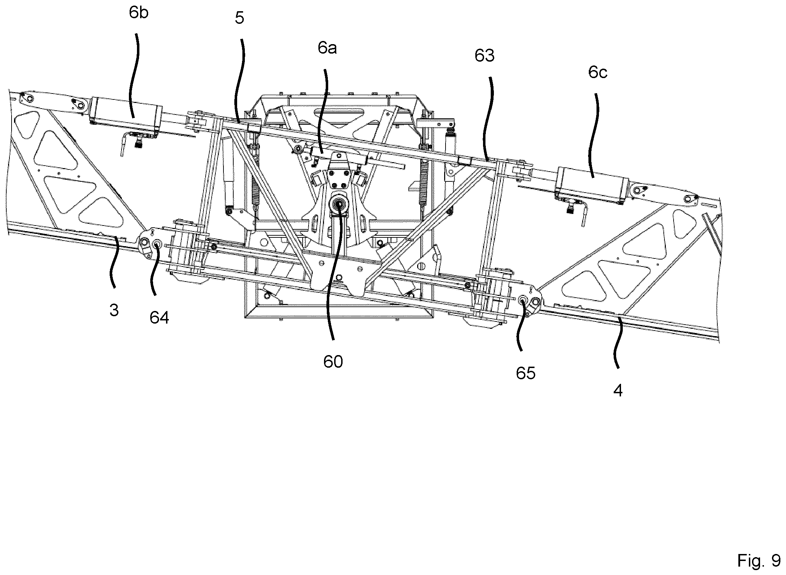

Some of the actuators 6 are provided for slope correction. Slope correction refers to adjusting the horizontal position or orientation of the sprayer boom 1 if one or both boom wings 3, 4 are in a partially or a fully unfolded position. Specifically, a first slope correction actuator 6a is assigned to the central boom section 5. A frame element of the central section 5 may be rotated around a rotation axis extending transversely to the unfolded sprayer boom 1 by operation of the first slope correction actuator 6a for conducting a central slope correction for the sprayer boom 1 (cf. Fig. 8 and 9 below).

Further, there second slope correction actuators 6b, 6c provided in a connection between the central boom section 5 and one of the boom wings 3, 4. By operating the second slope correction actuators 6b, 6c, the boom wings 3, 4can be individually pivoted relative to the central section for slope correction. Thus, individual slope correction can be conducted by the second slope correction actuators 6b, 6c in addition or alternatively to the central slope correction.

At least for the first and second slope correction actuators 6a, 6b, 6c, the actuator element 7 is changing element length for conducting relocation or movement of the central section 5 and the boom wing 3, 4, respectively, if conducting slope correction.

The actuators 6 provided with the actuator element 7, in general, may be length or stroke controlled. However, such design may not be presented for actuators 6 not being controlled for slope correction.

The first and second slope correction actuators 6a, 6b, 6c each have assigned a sensor device 9 which is configured to detect measurement signals indicative of the element length of the actuator element 7 of the slope correction actuators 6a, 6b, 6c. In operation the measurement signals detected by the sensor device 9 are provided to the operation controller 8 controlling operation of the sprayer boom 1. Thus, length or stroke controlled operation can be conducted for the first and second slope correction actuators 6a, 6b, 6c, and, optionally, for others of the actuators 6, if such additional actuators 6 are also provided with the sensor device 9.

A first request for slope correction for the sprayer boom 1 by moving the sprayer boom to a first slope correction position may be received in the operation controller 8. The first slope correction position of the sprayer boom 1 is assigned to a first element length of the first slope correction actuator 6a. In the operation controller 8 first slope correction control signals assigned to the first element length of the actuator element 7 of the first slope correction actuator 6a are provided. The first slope correction control signals are applied to the first slope correction actuator 6a, thereby, adjusting the element length of the actuator element 7 of the first slope correction actuator 6a to the first element length for moving the sprayer boom 1 to the first slope correction position. The central section 5 is rotated in response, thereby, conducting central slope correction.

In response to receiving measurement signals (from the sensor device 9) indicative of the element length of the actuator element 7, a slope correction position of the central section and / or one of the boom wings 3, 4 may be derived.

A second request for slope correction for the sprayer boom 1 by moving the sprayer boom to a second slope correction position may be received in the operation controller 8. The second slope correction position of the sprayer boom 1 is assigned to a second element length of the first slope correction actuator 6a. In the operation controller 8 second slope correction control signals assigned to the second element length of the actuator element 7 of the first slope correction actuator 6a are provided. The second slope correction control signals are applied to the first slope correction actuator 6a, thereby, adjusting the element length of the actuator element 7 of the second slope correction actuator 6a to the second element length for moving the sprayer boom 1 to the second slope correction position. The central section 5 is rotated in response, thereby, conducting central slope correction.

Similar operation can be applied to the second slope correction actuators 6b, 6c for conducting movement of one or both boom wings 3, 4 individually for individual slope correction.

A request for slope correction may be provided in the operation controller 8 in response to detecting changing slope of the ground on which the agricultural sprayer is travelling in operation.

For accomplishing length controlled operation which may also be referred to as stroke controlled operation of the actuators 7, assignment between a plurality of element length values and respective positions of at least one of the sprayer boom 1, the boom wings 3, 4, and one or more boom sections 2 is provided in the operation controller 8. Electronic assignment data indicative of the assignment are stored in a memory accessible by the operation controller 8 by reading such electronic assignment data. The electronic assignment data can be provided in a learning or configuration process, for example, in response to user input indicative of some position of the sprayer boom 1, the boom wings 3, 4 or one or more boom sections 2. Such user input can be assigned to element length values derived from measurement signals indicative of the element length of the actuator element 7.

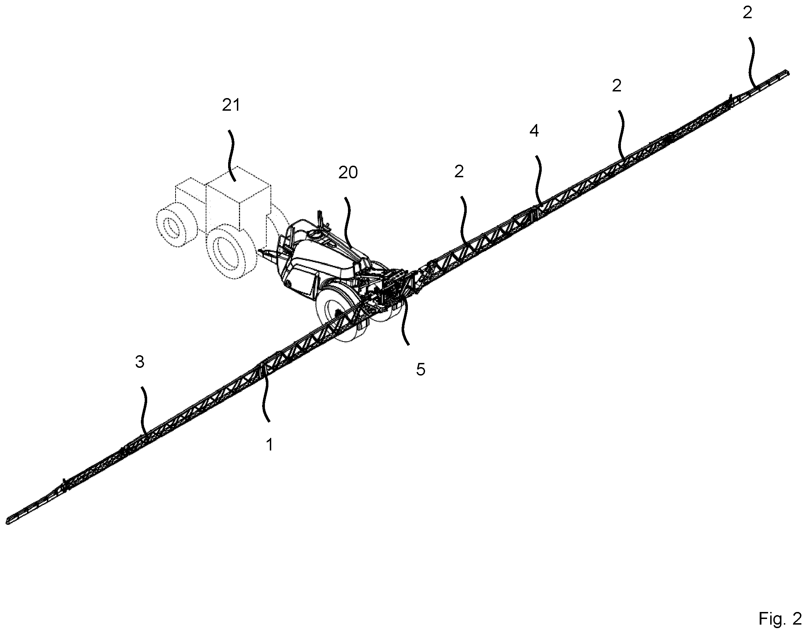

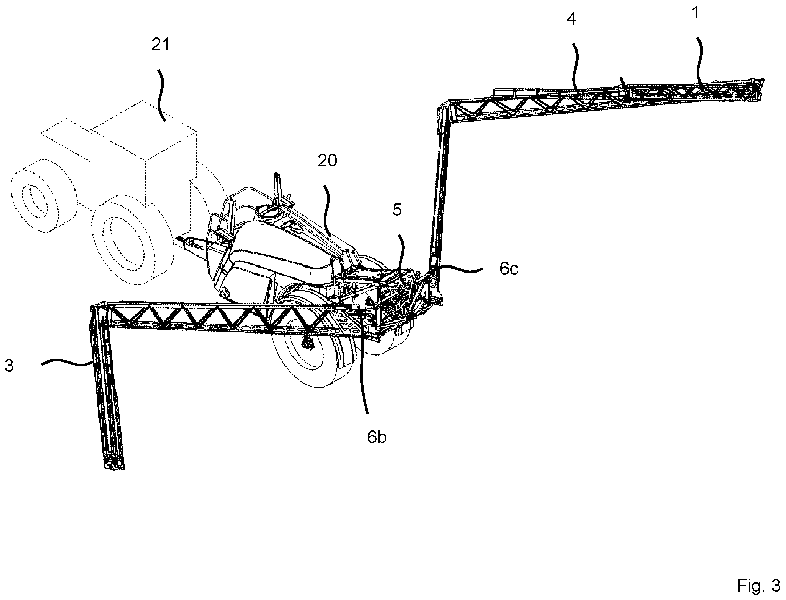

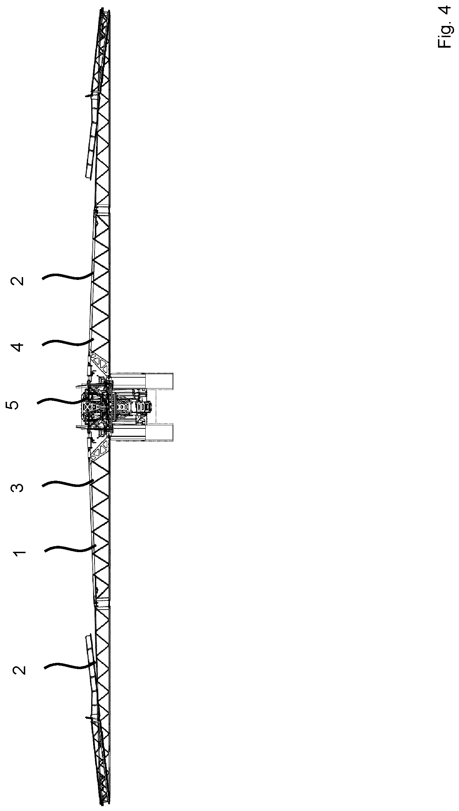

Fig. 2 to 4 show schematic representations of an agricultural sprayer 20 provided as an implement hooked to a tractor 21. Alternatively, the agricultural sprayer may be provided as a self propelling machine (not shown). The sprayer boom 1 comprises boom sections 2 provided in the boom wings 3, 4 which are located on opposite sides of the central boom section 5. Different positions are depicted for the sprayer boom 1, namely a working position which is a fully unfolded position for the embodiment shown (Fig. 2), in a partly folded position during folding (Fig. 3), and in a partially extended position (Fig. 4) which may be also a working position with limited working width compared to the position shown in Fig. 2.

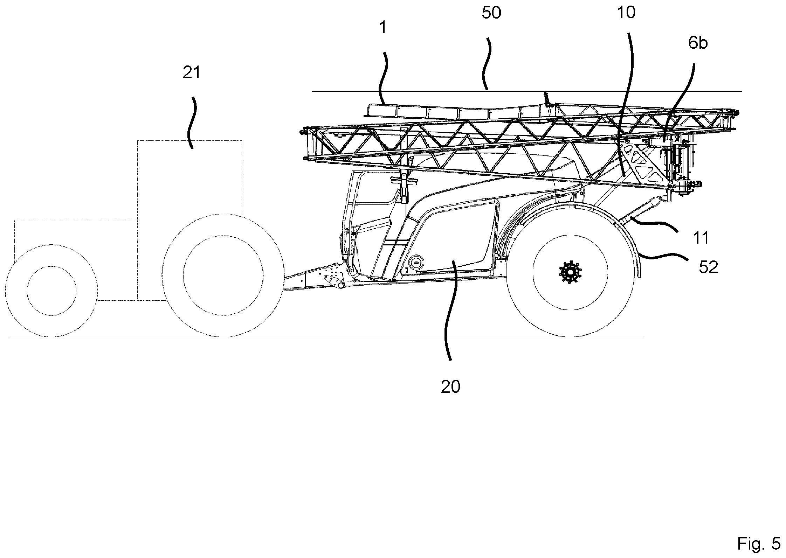

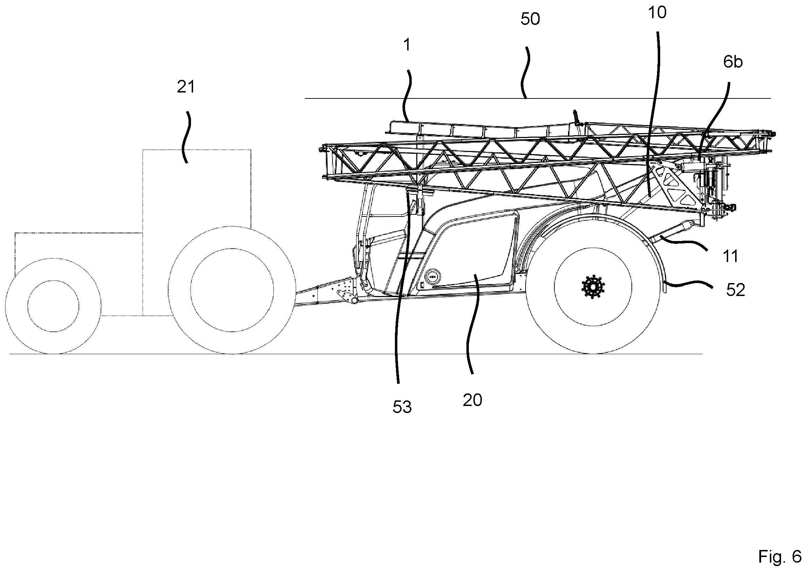

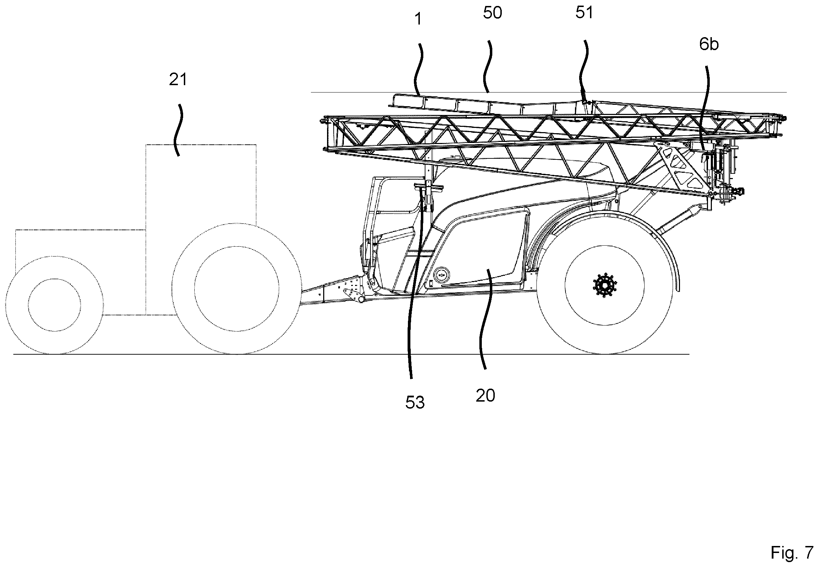

Referring to Fig. 5 to 7, different positions of the sprayer boom 1 are shown in a side view, the sprayer boom 1 being in a folded position. Wile the sprayer boom 1 is folded and finally located in a fully folded transport position (see Fig. 6), the sprayer boom 1 is controlled not to exceed a clearance height 50 as shown in Fig. 5 and 6. Such controlling is accomplished by controlling the element length of the second slope correction actuators 6b, 6c by the operation controller 8 on the opposite sides of the central boom section 5. As an option, clearance height control may be accomplished in combination with operation control of a lifting cylinder 10 which may be provided in a parallelogram mechanism 11. For the lifting cylinder 10 stroke or length operation control may be applied similar to the operation control described for the slope correction actuators 6a, 6b, 6c. By means of such (length or stroke) controlling applied to the second slope correction actuators 6b, 6c a situation in which an element 51 of the sprayer boom 1 is exceeding the clearance height 50 as shown in Fig. 7 is prevented.

Further, by applying the (length or stroke) controlling to the second slope correction actuators 6b, 6c, the sprayer boom 1 is also prevented from possible collision with a mudguard 52, for example, in the process of folding and unfolding the sprayer boom 1. Sufficient clearance to the mudguard 52 can be established also in the transport position of the sprayer boom 1, so that up and down movement of the parallelogram mechanism 11 and the sprayer boom 1 is possible during transport without collision with the mudguard 52 (or other part) of the machine. The sprayer boom 1 is prevented from both exceeding the clearance height 50 and colliding with the mudguard 52 (and / or some other element or part of the agricultural sprayer 20). Such controlling may be accomplished by combined operation control applied for both the second slope correction actuators 6b, 6c and the lifting cylinder 10.

Referring to Fig. 5 and 6, the sprayer boom 1 after being folded (cf. Fig. 5), is lowered to rest on a support element 53 (cf. Fig. 6), thereby, being provided in a transport position. If the sprayer boom 1 is in the transport position, the second slope correction actuators 6b, 6c are provided in a non-tensioned position. Thus, connections (cf. Fig. 8 and 9) comprising the second slope correction actuators 6b, 6c and provided between the central boom section 5 and the boom wings 3, 4 are in a non-tensioned position.

Fig. 8 and 9 show schematic representations of a central portion of the sprayer boom 1. The sprayer boom 1, for central slope correction, is rotated around a rotation axis 60 to different slope correction positions. For such central slope correction, the element length of the first slope correction actuator 6a is adjusted by length controlled operation in response to slope correction signals received from the operation controller 8.

The boom wings 3, 4 are, through a link or connection 61, 62 comprising the second slope correction actuators 6b, 6c, pivotably connected to the central boom section 5 comprising a frame element 63. Pivot axis 64, 65 are provided on opposite sides of the central boom sections 3, 4. The boom wings 3, 4 are pivoted, for individual slope correction, by adjusting the element length of the second slope correction actuators 6b, 6c. The second slope correction actuators 6b, 6c can be operated separately by the operation controller 8 for individually adjusting position of the boom wings 3, 4 for slope correction.

## Claims

1. An agricultural sprayer, comprising
- a sprayer boom (1) having
- a central boom section (5);
- a plurality of boom sections (2) provided in boom wings (3, 4) pivotably connected to the central boom section (5) on opposite sides of the central boom section (5), and
- a plurality of dispensing elements provided on the boom wings (3, 4) for dispensing a spraying material in operation;
- an actuator (6a; 6b; 6c) comprising an actuator element (7) which, for slope correction, can be moved between at least a retracted and an extended position, wherein an element length of the actuator element (7) is changed when the actuator element (7) is moved between the retracted and the extended position and wherein the actuator (6a; 6b; 6c) is configured, by adjusting the element length of the actuator element (7), to provide slope correction for the sprayer boom (1);
- a length measurement device assigned to the actuator (6a; 6b; 6c) configured to provide measurement signals being indicative of the element length of the actuator element (7); and
- an operation controller (8) configured to
- receive a first request for slope correction for the sprayer boom (1), comprising moving the sprayer boom (1) to a first slope correction position;
- assign the first slope correction position of the sprayer boom (1) to a first element length of the actuator element (7);
- provide first slope correction control signals assigned to the first element length of the actuator element (7);
- apply the first slope correction control signals to the actuator element (7), thereby, adjusting the element length of the actuator element (7) to the first element length for moving the sprayer boom (1) to the first slope correction position; and
- in response, receive the measurement signals from the length measurement device and check whether the element length of the actuator element (7) has been adjusted correctly.

2. The agricultural sprayer of claim 1, wherein the operation controller (8) is further configured to
- receive a second request for slope correction for the sprayer boom (1), comprising moving the sprayer boom (1) to a second slope correction position different from the first slope correction position;
- assign the second slope correction position of the sprayer boom (1) to a second element length of the actuator element (7) different from the first element length;
- provide second slope correction control signals assigned to the second element length of the actuator element (7); and
- apply the second slope correction control signals to the actuator element (7), thereby, adjusting the element length of the actuator element (7) from the first element length to the second element length for moving the sprayer boom (1) from the first slope correction position to the second slope correction position.

3. The agricultural sprayer of claim 1 or 2, wherein the actuator element (7) is
- functionally connected to the central section (5) and
- configured to apply rotational movement to the central section (5) around an axis extending transversely to a sprayer boom extension in an unfolded position of the sprayer boom (1) for moving the sprayer boom (1) to at least one of the first slope correction position and the second slope correction position.

4. The agricultural sprayer of one of the preceding claims, wherein the actuator element (7) is
- provided in a functional connection between the central section (5) and one of the boom wings and
- configured to pivot the boom wing relative to the central section (5) for moving the sprayer boom (1) to at least one of the first slope correction position and the second slope correction position.

5. The agricultural sprayer of one of claims 3 and 4, wherein the operation controller (8) is further configured to apply
- the first slope correction control signals to a first actuator element functionally connected to the central section (5) for moving the sprayer boom (1) to one of the first slope correction position and the second slope correction position; and
- the second slope correction control signals to a second actuator element provided in functional connection between the central section (5) and one of the boom wings for moving the sprayer boom (1) to the other one of the first slope correction position and the second slope correction position.

6. The agricultural sprayer of one of the preceding claims, as far as referring to claim 4, wherein the operation controller (8) is further configured to apply an element length control mode for the actuator (6a; 6b; 6c) while the boom wings are moved between an unfolded operation position and an folded transport position.

7. The agricultural sprayer of claim 6, wherein the operation controller (8), for applying the element length control mode for the actuator (6a; 6b; 6c), is further configured to
- provide a plurality of allowed element length values for the element length of the actuator element (7), wherein for each of the allowed element length values, while the boom wings are moved between the unfolded operation position and the folded transport position, at least one of the following is provided: the sprayer boom is kept below a clearance height, and the sprayer is kept outside a lower distance limit with respect to at least one other element of the agricultural sprayer;
- allow the actuator element (7) adjusting the element length to one or more of the allowed element length values; and
- prevent the actuator element (7) from adjusting the element length to a forbidden element length value different from the plurality of allowed element length values.

8. The agricultural sprayer of claim 7, wherein the operation controller (8), for applying the element length control mode for the actuator (6a; 6b; 6c), is further configured to
- provide an user information signal indicative of at least one of the element length of the actuator element (7) having one of the allowed element length values and preventing the actuator element (7) from adjusting the element length to the forbidden element length value; and
- output the user information signal through an output device.

9. The agricultural sprayer of one of the preceding claims, wherein the actuator element (7) comprises a pull-type cylinder.

10. A method for operating an agricultural sprayer having
- a sprayer boom (1) having
- a central boom section (5);
- a plurality of boom sections (2) provided in boom wings (3, 4) pivotably connected to the central boom section (5) on opposite sides of the central boom section (5), and
- a plurality of dispensing elements provided on the boom wings (3, 4) for dispensing a spraying material in operation;
- an actuator (6a; 6b; 6c) comprising an actuator element (7) which can be moved between at least a retracted and an extended position, wherein an element length of the actuator element (7) is changed when the actuator element (7) is moved between the retracted and the extended position and wherein the actuator (6a; 6b; 6c) is configured, by adjusting the element length of the actuator element (7), to provide slope correction for the sprayer boom (1);
- a length measurement device assigned to the actuator (6a; 6b; 6c) configured to provide measurement signals being indicative of the element length of the actuator element (7); and
- an operation controller (8);
the method comprising an operation controller (8) configured to
- receiving a first request for slope correction for the sprayer boom (1), comprising moving the sprayer boom (1) to a first slope correction position;
- assigning the first slope correction position of the sprayer boom (1) to a first element length of the actuator element (7);
- providing first slope correction control signals assigned to the first element length of the actuator element (7);
- applying the first slope correction control signals to the actuator element (7), thereby, adjusting the element length of the actuator element (7) to the first element length for moving the sprayer boom (1) to the first slope correction position; and
- in response, receiving the measurement signals from the length measurement device and checking whether the element length of the actuator element (7) has been adjusted correctly.

## Patentansprüche

1. Ein landwirtschaftliches Sprühgerät, aufweisend
- einen Sprühausleger (1), aufweisend
- einen zentralen Auslegerabschnitt (5);
- eine Mehrzahl von Auslegerabschnitten (2), welche in Auslegerflügeln (3, 4), welche an entgegengesetzten Seiten des zentralen Auslegerabschnitts (5) schwenkbar mit dem zentralen Auslegerabschnitt (5) verbunden sind, bereitgestellt sind, und
- eine Mehrzahl von Ausgabeelementen, welche an den Auslegerflügeln (3, 4) bereitgestellt sind, um im Betrieb ein Sprühmaterial auszugeben;
- einen Stellantrieb (6a; 6b; 6c), welcher ein Stellelement (7) aufweist, welches zum Hangneigungsausgleich zwischen mindestens einer eingefahrenen und einer ausgefahrenen Position bewegt werden kann, wobei sich eine Elementlänge des Stellelements (7) verändert, wenn das Stelleelement (7) zwischen der eingefahrenen und der ausgefahrenen Position bewegt wird, und wobei der Stellantrieb (6a; 6b; 6c) dafür eingerichtet ist, die Elementlänge des Stellelements (7) einzustellen, um den Hangneigungsausgleich für den Sprühausleger (1) bereitzustellen;
- eine Längenmessvorrichtung, welche dem Stellantrieb (6a; 6b; 6c) zugeordnet ist, und welche dafür eingerichtet ist, Messsignale zum Anzeigen der Elementlänge des Stellelements (7) bereitzustellen; und
- ein Betriebssteuerungselement (8), welches dafür eingerichtet ist
- eine erste Anfrage für den Hangneigungsausgleich für den Sprühausleger (1), welche das Bewegen des Sprühauslegers (1) in eine erste Hangneigungsausgleichsposition umfasst, zu empfangen;
- die erste Hangneigungsausgleichsposition des Sprühauslegers (1) einer ersten Elementlänge des Stellelements (7) zuzuordnen;
- erste Hangneigungsausgleichssteuersignale, welche der ersten Elementlänge des Stellelements (7) zugeordnet sind, bereitzustellen;
- die ersten Hangneigungsausgleichssteuersignale auf das Stellelement (7) anzuwenden, wodurch die Elementlänge des Stellelements (7) auf die erste Elementlänge eingestellt wird, um den Sprühausleger (1) in die erste Hangneigungsausgleichsposition zu bewegen; und
- als Reaktion darauf, die Messsignale von der Längenmessvorrichtung zu empfangen und zu überprüfen, ob die Elementlänge des Stellelements (7) korrekt eingestellt worden ist.

2. Das landwirtschaftliche Sprühgerät nach Anspruch 1, wobei das Betriebssteuerungselement (8) ferner dafür eingerichtet ist,
- eine zweite Anfrage für den Hangneigungsausgleich für den Sprühausleger (1), welche das Bewegen des Sprühauslegers (1) in eine zweite Hangneigungsausgleichsposition, welche sich von der erste Hangneigungsausgleichsposition unterscheidet, umfasst, zu empfangen;
- die zweite Hangneigungsausgleichsposition des Sprühauslegers (1) einer zweiten Elementlänge des Stellelements (7), welche sich von der ersten Elementlänge unterscheidet, zuzuordnen;
- zweite Hangneigungsausgleichssteuersignale, welche der zweiten Elementlänge des Stellelements (7) zugeordnet sind, bereitzustellen; und
- die zweiten Hangneigungsausgleichssteuersignale auf das Stellelement (7) anzuwenden, wodurch die Elementlänge des Stellelements (7) von der ersten Elementlänge auf die zweite Elementlänge eingestellt wird, um den Sprühausleger (1) aus der ersten Hangneigungsausgleichsposition in die zweite Hangneigungsausgleichsposition zu bewegen.

3. Das landwirtschaftliches Sprühgerät nach Anspruch 1, wobei das Stellelement (7)
- mit dem zentralen Abschnitt (5) wirkverbunden ist und
- dafür eingerichtet ist, in einer ausgeklappten Position des Sprühauslegers (1) eine Drehbewegung um eine Achse, welche sich quer zu einer Sprühauslegerausdehnung erstreckt, auf den zentralen Abschnitt (5) anzuwenden, um den Sprühausleger (1) in mindestens eine der Positionen aus einer Gruppe umfassend die erste Hangneigungsausgleichsposition und die zweite Hangneigungsausgleichsposition zu bewegen.

4. Das landwirtschaftliche Sprühgerät nach einem der vorstehenden Ansprüche, wobei das Stellelement (7)
- in einer Wirkverbindung zwischen dem zentralen Abschnitt (5) und einem der Auslegerflügel bereitgestellt ist, und
- dafür eingerichtet ist, den Auslegerflügel relativ zum zentralen Abschnitt (5) zu schwenken, um den Sprühausleger (1) in mindestens eine der Positionen aus der Gruppe umfassend die erste Hangneigungsausgleichsposition und die zweite Hangneigungsausgleichsposition zu bewegen.

5. Das landwirtschaftliche Sprühgerät nach einem der Ansprüche 3 bis 4, wobei das Betriebssteuerungselement (8) ferner dafür eingerichtet ist,
- die ersten Hangneigungsausgleichssteuersignale auf ein erstes Stellelement, welches mit dem zentralen Abschnitt (5) wirkverbunden ist, anzuwenden, um den Sprühausleger (1) in eine der Positionen aus der Gruppe umfassend die erste Hangneigungsausgleichsposition und die zweite Hangneigungsausgleichsposition zu bewegen; und
- die zweiten Hangneigungsausgleichssteuersignale auf eine zweites Stellelement, welches in Wirkverbindung zwischen dem zentralen Abschnitt (5) und einem der Auslegerflügel bereitgestellt ist, anzuwenden, um den Sprühausleger (1) in die andere der Positionen aus der Gruppe umfassend die erste Hangneigungsausgleichsposition und die zweite Hangneigungsausgleichsposition zu bewegen.

6. Das landwirtschaftliche Sprühgerät nach einem der vorstehenden Ansprüche, soweit sich diese auf Anspruch 4 beziehen, wobei das Betriebssteuerungselement (8) ferner dafür eingerichtet ist, einen Elementlängensteuermodus für den Stellantrieb (6a; 6b; 6c) anzuwenden, während die Auslegerflügel zwischen einer ausgeklappten Betriebsposition und einer eingeklappten Transportposition bewegt werden.

7. Das landwirtschaftliche Sprühgerät nach Anspruch 6, wobei das Betriebssteuerungselement (8) zum Anwenden des Elementlängensteuermodus für den Stellantrieb (6a; 6b; 6c) ferner dafür eingerichtet ist,
- eine Mehrzahl zulässiger Elementlängenwerte für die Elementlänge des Stellelements (7) bereitzustellen, wobei, während die Auslegerflügel zwischen der ausgeklappten Betriebsposition und der eingeklappten Transportposition bewegt werden, für jeden der zulässigen Elementlängenwerte mindestens einer der folgenden Umstände erfüllt ist: der Sprühausleger wird unter einer Durchfahrhöhe gehalten, und der Sprühausleger wird außerhalb einer unteren Abstandsbegrenzung in Bezug auf mindestens ein anderes Element des landwirtschaftlichen Sprühgeräts gehalten;
- zuzulassen, dass das Stellelement (7) die Elementlänge auf einen oder mehrere der zulässigen Elementlängenwerte einstellt; und
- zu verhindern, dass das Stellelement (7) die Elementlänge auf einen unzulässigen Elementlängenwert, welcher sich von der Mehrzahl zulässiger Elementlängenwerte unterscheidet, einstellt.

8. Das landwirtschaftliche Sprühgerät nach Anspruch 7, wobei das Betriebssteuerungselement (8) zum Anwenden des Elementlängensteuermodus für den Stellantrieb (6a; 6b; 6c) ferner dafür eingerichtet ist,
- ein Bedienerinformationssignal bereitzustellen, welches entweder anzeigt, dass die Elementlänge des Stellelements (7) einen der zulässigen Elementlängenwerte aufweist, und/oder anzeigt, dass verhindert wird, dass das Stellelement (7) die Elementlänge auf einen unzulässigen Elementlängenwert einstellt; und
- das Bedienerinformationssignal an eine Ausgabevorrichtung auszugeben.

9. Das landwirtschaftliche Sprühgerät nach einem der vorstehenden Ansprüche, wobei das Stellelement (7) einen Zugzylinder aufweist.

10. Ein Verfahren zum Betreiben eines landwirtschaftlichen Sprühgeräts, das Sprühgerät aufweisend
- einen Sprühausleger (1), aufweisend
- einen zentralen Auslegerabschnitt (5);
- eine Mehrzahl von Auslegerabschnitten (2), welche in Auslegerflügeln (3, 4), welche an entgegengesetzten Seiten des zentralen Auslegerabschnitts (5) schwenkbar mit dem zentralen Auslegerabschnitt (5) verbunden sind, bereitgestellt sind, und
- eine Mehrzahl von Ausgabeelementen, welche an den Auslegerflügeln (3, 4) bereitgestellt sind, um im Betrieb ein Sprühmaterial auszugeben;
- einen Stellantrieb (6a; 6b; 6c), welcher ein Stellelement (7) aufweist, welches zwischen mindestens einer eingefahrenen und einer ausgefahrenen Position bewegt werden kann, wobei sich eine Elementlänge des Stellelements (7) verändert, wenn das Stelleelement (7) zwischen der eingefahrenen und der ausgefahrenen Position bewegt wird, und wobei der Stellantrieb (6a; 6b; 6c) dafür eingerichtet ist, die Elementlänge des Stellelements (7) einzustellen, um einen Hangneigungsausgleich für den Sprühausleger (1) bereitzustellen;
- eine Längenmessvorrichtung, welche dem Stellantrieb (6a; 6b; 6c) zugeordnet ist, und welche dafür eingerichtet ist, Messsignale zum Anzeigen der Elementlänge des Stellelements (7) bereitzustellen; und
- ein Betriebssteuerungselement (8);
wobei das Verfahren ein Betriebssteuerungselement (8) aufweist, welches dafür eingerichtet ist,
- eine erste Anfrage für den Hangneigungsausgleich für den Sprühausleger (1), welche das Bewegen des Sprühauslegers (1) in eine erste Hangneigungsausgleichsposition umfasst, zu empfangen;
- die erste Hangneigungsausgleichsposition des Sprühauslegers (1) einer ersten Elementlänge des Stellelements (7) zuzuordnen;
- die ersten Hangneigungsausgleichssteuersignale, welche der ersten Elementlänge des Stellelements (7) zugeordnet sind, bereitzustellen;
- die ersten Hangneigungsausgleichssteuersignale auf das Stellelement (7) anzuwenden, wodurch die Elementlänge des Stellelements (7) auf die erste Elementlänge eingestellt wird, um den Sprühausleger (1) in die erste Hangneigungsausgleichsposition zu bewegen; und
- als Reaktion darauf, die Messsignale von der Längenmessvorrichtung zu empfangen und zu überprüfen, ob die Elementlänge des Stellelements (7) korrekt eingestellt worden ist.

## Revendications

1. Pulvérisateur agricole, comprenant
- une rampe de pulvérisateur (1) ayant
- une section centrale de rampe (5) ;
- une pluralité de sections de rampe (2) prévues dans des ailes de rampe (3, 4) connectées de manière pivotable à la section centrale de rampe (5) sur des faces opposées de la section centrale de rampe (5), et
- une pluralité d'éléments de distribution prévus sur les ailes de rampe (3, 4) pour distribuer une matière de pulvérisation en cours de fonctionnement ;
- un actionneur (6a ; 6b, 6c) comprenant un élément actionneur (7) qui, pour la correction de pente, peut être déplacé entre au moins une position rétractée et une position déployée, une longueur d'élément de l'élément actionneur (7) étant modifiée lorsque l'élément actionneur (7) est déplacé entre la position rétractée et la position déployée, et l'actionneur (6a ; 6b, 6c) étant configuré, en réglant la longueur d'élément de l'élément actionneur (7), pour assurer une correction de pente pour la rampe de pulvérisateur (1) ;
- un dispositif de mesure de longueur affecté à l'actionneur (6a ; 6b, 6c) et configuré pour fournir des signaux de mesure qui sont indicatifs de la longueur d'élément de l'élément actionneur (7) ; et
- une commande d'actionnement (8) configurée pour
- recevoir une première demande de correction de pente pour la rampe de pulvérisateur (1), comprenant le déplacement de la rampe de pulvérisateur (1) vers une première position de correction de pente ;
- affecter la première position de correction de pente de la rampe de pulvérisateur (1) à une première longueur d'élément de l'élément actionneur (7) ;
- fournir des premiers signaux de commande de correction de pente affectés à la première longueur d'élément de l'élément actionneur (7) ;
- appliquer les premiers signaux de commande de correction de pente à l'élément actionneur (7) en réglant ainsi la longueur d'élément de l'élément actionneur (7) sur la première longueur d'élément pour déplacer la rampe de pulvérisateur (1) jusqu'à la première position de correction de pente ; et
- en réaction, recevoir les signaux de mesure de la part du dispositif de mesure de longueur et vérifier si la longueur d'élément de l'élément actionneur (7) a été réglée correctement.

2. Pulvérisateur agricole selon la revendication 1, dans lequel la commande d'actionnement (8) est en outre configurée pour
- recevoir une seconde demande de correction de pente pour la rampe de pulvérisateur (7), comprenant le déplacement de la rampe de pulvérisateur (1) vers une seconde position de correction de pente différente de la première position de correction de pente ;
- affecter la seconde position de correction de pente de la rampe de pulvérisateur (1) à une seconde longueur d'élément de l'élément actionneur (7) différente de la première longueur d'élément ;
- fournir des seconds signaux de commande de correction de pente affectés à la seconde longueur d'élément de l'élément actionneur (7) ;
- appliquer les seconds signaux de commande de correction de pente à l'élément actionneur (7) en passant ainsi la longueur d'élément de l'élément actionneur (7) de la première longueur d'élément à la seconde longueur d'élément pour faire passer la rampe de pulvérisateur (1) de la première position de correction de pente à la seconde position de correction de pente.

3. Pulvérisateur agricole selon la revendication 1, dans lequel l'élément actionneur (7) est
- connecté fonctionnellement à la section centrale (5) et
- configuré pour appliquer un mouvement de rotation à la section centrale (5) autour d'un axe s'étendant transversalement jusqu'à une extension de rampe de pulvérisateur en position non pliée de la rampe de pulvérisateur (1) pour déplacer la rampe de pulvérisateur (1) vers au moins une position parmi la première position de correction de pente et la seconde position de correction de pente.

4. Pulvérisateur agricole selon l'une quelconque des revendications précédentes, dans lequel l'élément actionneur (7) est
- prévu en connexion fonctionnelle entre la section centrale (5) et l'une des ailes de rampe et
- configuré pour faire pivoter l'aile de rampe par rapport à la section centrale (5) pour déplacer la rampe de pulvérisateur (1) vers au moins une position parmi la première position de correction de pente et la seconde position de correction de pente.

5. Pulvérisateur agricole selon l'une quelconque des revendications 3 et 4, dans lequel la commande d'actionnement (8) est en outre configurée pour appliquer
- les premiers signaux de commande de correction de pente à un premier élément actionneur connecté fonctionnellement à la section centrale (5) pour déplacer la rampe de pulvérisateur (1) vers au moins une position parmi la première position de correction de pente et la seconde position de correction de pente ; et
- les seconds signaux de commande de correction de pente à un second élément actionneur prévu en connexion fonctionnelle entre la section centrale (5) et l'une des ailes de rampe pour déplacer la rampe de pulvérisateur (1) vers l'autre position parmi la première position de correction de pente et la seconde position de correction de pente

6. Pulvérisateur agricole selon l'une quelconque des revendications précédentes dans la mesure où elle se réfère à la revendication 4, dans lequel la commande d'actionnement (8) est en outre configurée pour appliquer un mode de commande de longueur d'élément pour l'actionneur (6a ; 6b, 6c) pendant que les ailes de rampe sont déplacées entre une position de fonctionnement non pliée et une position de transport pliée.

7. Pulvérisateur agricole selon la revendication 6, dans lequel la commande d'actionnement (8), pour appliquer le mode de commande de longueur d'élément pour l'actionneur (6a ; 6b, 6c), est en outre configurée pour
- fournir une pluralité de valeurs de longueur d'élément permises pour la longueur d'élément de l'élément actionneur (7), sachant que, pour chacune des valeurs de longueur d'élément permises, tandis que les ailes de rampe sont déplacées entre la position de fonctionnement non pliée et la position de transport pliée, au moins l'un des cas suivants est prévu : la rampe de pulvérisateur est maintenue en dessous d'une hauteur de dégagement, et la pulvérisateur est maintenu à l'extérieur d'une limite de distance inférieure par rapport à au moins un autre élément du pulvérisateur agricole ;
- permettre à l'élément actionneur (7) de régler la longueur d'élément sur une ou plusieurs des valeurs de longueur d'élément permises ; et
- empêcher l'élément actionneur (7) de régler la longueur d'élément sur une valeur de longueur d'élément interdite différente de la pluralité de valeurs de longueur d'élément permises.

8. Pulvérisateur agricole selon la revendication 7, dans lequel la commande d'actionnement (8), pour appliquer le mode de commande de longueur d'élément pour l'actionneur (6a ; 6b, 6c), est en outre configurée pour
- fournir un signal d'information d'utilisateur indicatif d'au moins une de la longueur d'élément de l'élément d'actionneur (7) ayant une des valeurs de longueur d'élément permises et empêcher l'élément actionneur (7) de régler la longueur d'élément sur la valeur de longueur d'élément interdite ; et
- émettre le signal d'information d'utilisateur par l'intermédiaire d'un dispositif d'émission.

9. Pulvérisateur agricole selon l'une quelconque des revendications précédentes, dans lequel l'élément actionneur (7) comprend un cylindre de type à traction.

10. Procédé d'utilisation d'un pulvérisateur agricole comportant
- une rampe de pulvérisateur (1) ayant
- une section centrale de rampe (5) ;
- une pluralité de sections de rampe (2) prévues dans des ailes de rampe (3, 4) connectées de manière pivotable à la section centrale de rampe (5) sur des faces opposées de la section centrale de rampe (5), et
- une pluralité d'éléments de distribution prévus sur les ailes de rampe (3, 4) pour distribuer une matière de pulvérisation en cours de fonctionnement ;
- un actionneur (6a ; 6b, 6c) comprenant un élément actionneur (7) qui peut être déplacé entre au moins une position rétractée et une position déployée, une longueur d'élément de l'élément actionneur (7) étant modifiée lorsque l'élément actionneur (7) est déplacé entre la position rétractée et la position déployée, et l'actionneur (6a ; 6b, 6c) étant configuré, en réglant la longueur d'élément de l'élément actionneur (7), pour assurer une correction de pente pour la rampe de pulvérisateur (1) ;
- un dispositif de mesure de longueur affecté à l'actionneur (6a ; 6b, 6c) et configuré pour fournir des signaux de mesure qui sont indicatifs de la longueur d'élément de l'élément actionneur (7) ; et
- une commande d'actionnement (8) ;
le procédé comprenant une commande d'actionnement (8) configurée pour
- recevoir une première demande de correction de pente pour la rampe de pulvérisateur (1), comprenant le déplacement de la rampe de pulvérisateur (1) vers une première position de correction de pente ;
- affecter une première position de correction de pente de la rampe de pulvérisateur (1) à une première longueur d'élément de l'élément actionneur (7) ;
- fournir des premiers signaux de commande de correction de pente affectés à la première longueur d'élément de l'élément actionneur (7) ;
- appliquer les premiers signaux de commande de correction de pente à l'élément actionneur (7) en réglant ainsi la longueur d'élément de l'élément actionneur (7) sur la première longueur d'élément pour déplacer la rampe de pulvérisateur (1) jusqu'à la première position de correction de pente ; et
- en réaction, recevoir les signaux de mesure de la part du dispositif de mesure de longueur et vérifier si la longueur d'élément de l'élément actionneur (7) a été réglée correctement.
